(19) Europäisches Patentamt
European Patent Office
Office européen des brevets

(11) **EP 1 609 832 A1**

(12) **EUROPEAN PATENT APPLICATION**

(43) Date of publication:
**28.12.2005 Bulletin 2005/52**

(51) Int Cl.⁷: **C09J 7/04**, A41D 27/24

(21) Application number: **05076445.5**

(22) Date of filing: **22.06.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **22.06.2004 BE 200400300**

(71) Applicant: **Van de Velde NV
9260 Schellebelle (BE)**

(72) Inventor: **van de Velde, Karel
9070 Destelbergen (BE)**

(74) Representative: **Ostyn, Frans
K.O.B. NV
President Kennedypark 31 C
8500 Kortrijk (BE)**

(54) **Temperature sensitive adhesive tape**

(57)     The invention concerns on the one hand a temperature sensitive adhesive tape for the forming of a hem of a panties from an elastic textile material and, on the other hand, a method of applying an elastic hem in an article of clothing made from elastic textile material. The tape can be processed under tension so that the hem with fringe can be finished, a good recovery achieved and the finished dimensions can be controlled.

**Fig. 1**

EP 1 609 832 A1

**Description**

The invention concerns on the one hand a temperature sensitive adhesive tape for the forming of a hem on an article of clothing from an elastic material comprising a temperature stable elastic support which is provided with at least one layer of adhesive on both sides and, on the other hand, a method of applying an elastic hem in an article of clothing made from elastic textile material.

The invention concerns more in particular the use of a temperature sensitive adhesive tape according to the invention for forming a hem on bathing-wear and underwear, more particularly for the forming of a hem on panties or a bra (brassiere).

With the aid of the invention, an article of clothing can be provided with a thinly bonded hem, with high elasticity as well as excellent recovery.

Recovery is the return to normal proportion of e.g. a garment after being stretched. More particularly, recovery is the relationship between the shrinking of the material (measured from the maximum point of stretching) and the maximum stretching of the material => recovery = 100%, if the material returns 100% to its original length; recovery = 0%, if the material remains fully out-stretched displaying no return to its normal proportion. Stretching can occur for example during the wearing of a garment.

Recovery is an important characteristic in diverse applications of elastic materials, for example in bathing wear and underwear. If the recovery is inadequate the clothes become permanently stretched which is most unacceptable for the user.

In this patent description temperature sensitive adhesive tape means: a tape that becomes activated through the increase of temperature. In other words, at room temperature the tape will not stick, but by a temperature increase to e.g. 160°C the adhesive layer does become active, causing the tape to actually adhere.

The finishing of the edges of the clothes (e.g. trousers, shirts, underwear etc.) is mostly done by hemming the material whereby the hem (the folded edge) is stitched. However, in recent years an alternative to stitching has appeared on the market. Hereby, use is made of a temperature sensitive adhesive tape that is introduced into the hem and secured by heat and pressure into the hem.

These applications were first aimed at non-elastic material. The adhesive tape that was applied had limited stretching capability whereby applications with elastic materials (such as in bathing wear and underwear) was not possible. Typical use of this application was with non-stretch materials like raincoats, trousers and shirts.

Then work was done to develop an improved adhesive tape that can be used in combination with stretch materials. The European patent publication EP 0 708 163 describes a tape with a support material consisting of a polyurethane elastomer that can stretch elastic together with the stretch material. Moreover, the bearing material has a higher melting point than the foreseen adhesive layer, whereby the support does not melt in the stretch material enabling the elastic material to continue to stretch well.

The solution described in EP 0 708 163 has however the disadvantage that the recovery is inadequate. As apparent in the given example in EP 0 708 163 the recovery is only about 75%, which is much lower than the required 95% (ideally 100%) for a garment of good quality.

Existing adhesive tapes on the market are a variant of the principle as described in EP 0 708 163. Examples are the tapes of Bemis and Framis. These adhesive tapes are constructed of one or two temperature sensitive adhesive layers with a layer of thermoplastic material in between, as support for the adhesive layers. By using thermoplastic material for support, the tape acquires certain elasticity, necessary for good elasticity of the hem.

The problem of existing tapes is that tape in its bonding state cannot be subject to mechanical stress because the temperature necessary to bring about the bonding process softens the thermoplastic support. At this moment a strong change occurs in the elastic characteristics. Through the temperature of the process, the tape actually becomes so slack that by lower stress these are already pulled apart.

Such tape can therefore only be processed without stress. By application to garments made of elastic textile material, a number of problems are quickly apparent:

-   because no pre-stress can be brought into the hem the recovery is moderate, the hem can stretch considerably in use and because of the moderate recovery, panties for example get unattractive stretch marks after only a little wear;
-   the finished dimensions of the hem are difficult to control because the elastic material can stretch during the process. In garments where the hem is stitched a fringe is applied here as a control mechanism, this mechanism is not possible when processing thermoplastic supports due to the necessity of working tension free;

In practice these aforementioned tapes only seem to work in combination with sturdy, less elastic materials.

The purpose of the invention is to obtain a temperature sensitive adhesive tape with a good recovery that can be used in clothes manufactured from elastic material that will retain their look even after being worn.

The purpose of the invention is achieved by the provision of a temperature sensitive adhesive tape for the making of a hem of a item of clothing out of stretch material, comprising a temperature stable elastic support that is foreseen with at least one layer of adhesive on both sides, and whereby the support has openings over at least a part of its area.

The support is preferably a knitted elastic material, with enough openings between the fibres. It is also possible to bring perforations into a closed support material.

In a preferred embodiment of the temperature sensitive adhesive tape, at least 25% of the area of the support should consist of openings, more preferentially at least 10% of the area of the support should consist of openings, more in particular consist of at least 30%, more in particular 30 to 90% of the area of the support of openings, exceptionally preferable 40 to 80% of the area of the support consists of openings. Less openings provide more contact between the tape and the garment making the connection stronger; more openings provide better recovery. E.g. 30% openings means that for each square meter, 30% of the area consists of openings. This 30% is distributed evenly over the area.

Through the provision of openings a tape has optimal recovery because part of the adhesive layer is situated in those openings. Experimentally it has been established that the adhesive situates itself easily between the textile that is to be bonded, whereby the whole stiffens. The combination of material and adhesive can still stretch but the material cannot return satisfactorily to its original length because the fibres are hindered by the adhesive between the fibres and the textile. The maximum diagonal dimension of the opening preferably lies between 0,1 and 0,5mm and in particular amounts to 0,25mm. In particular the amount of openings per length unit of the support almost equal to the amount of openings per length unit of the elastic textile material to be bonded. The maximum diagonal dimension of the opening depends on the distance between the threads in the fabric to be bonded. In fine woven or knitted fabric e.g. 20 threads per cm. the structure of the elastic support should preferably agree with 20 threads and 20 openings per cm., the size of the openings being here then about 1cm. / 40 = 0.25 mm.

In this patent description the term "temperature stable support" means that the elastic properties of the material from which the support is manufactured are maintained during change of temperature. More particularly, it means that the Modulus (power necessary for 60% elasticity) maximum 50% reduced by a temperature increase of 20 °C to 160 °C for example.

The said support is to be manufactured, with existing textile techniques, out of known threads such as polyamide or polyester. Preferably the fabric also comprises elastomer threads in order to obtain the correct elastic properties. In a preferred embodiment of the adhesive tape according to the invention the said adhesive layer contains polyurethane adhesive. Other adhesive layers are also possible on the condition that they are capable of 100% elasticity and can sustain a stable adhesive connection in the seam. The thickness of the adhesive layer in a particular embodiment lies between 40 and 60 μm and in particular amounts to 50 μm.

In a more particular embodiment of the adhesive tape according to the invention the width of the tape amounts to 12 mm at the highest; preferably the height of the tape lies between 6 mm and 12 mm. The width of the tape depends on the desired fineness of the hem.

In a most particular embodiment of the adhesive tape according to the invention the thickness of the said support lies between 200 μm and 400 μm and consists of supporting material made of a thin elastic material that also retains its elastic properties under high temperature. Hereby the tape can also be subject to tension even during application of the adhesive (done under high temperature) and the tension can be introduced into the bonded hem of the garment. With this tape it is hereby possible to apply fringe to the finishing edge. The advantage, as far as existing tapes are concerned, is that this tape has many more possibilities by the application as well as giving a better finish as follows:

- the tape can be processed under tension whereby the hem with fringe can be finished and the finished dimensions can be checked;
- the recovery is better than with the tapes out of stand of the technique, whereby the finish keeps an attractive appearance after wearing;
- the cost price can be kept low by simply laminating the elastic support on the full breadth with the adhesive layers and after that cut to tapes at the required length.

Preferably, different variations of the adhesive tape can be manufactured with different elastic properties by using various support materials or adhesives.

Another subject of this invention concerns a method of applying an elastic hem in an article of clothing made from elastic textile material whereby the method comprises the following steps:

- the provision of an adhesive tape according to one of the claims 1 up to and including 8;
- the forming of the hem of the said garment whereby the said tape is introduced into the hem of the said garment;

- the whole subject to heat treatment whereby a durable elastic hem can be formed.

This heat treatment occurs preferably on a sewing machine-like continuous adhesive machine.

According to a preferred method, the said heat treatment occurs while the tape is held under tension (out-stretched) where the following effects are created:

- the fibres of the fabric to be bonded are pressed together, whereby excessive adhesive is prevented from coming out of the fabric;
- a fringed hem is obtained;
- the correct finished size is obtained.

Clothes manufactured by such method have the following advantages:

- a tight and visually attractive look;
- thin finish that shows a minimum under the top clothes;
- no extra finishing elastic or adhesive necessary.

The adhesive tape according to the invention is preferably used for the forming of a hem, in particular the hem of lingerie, more particularly the forming of hems for panties and bra's.

The adhesive tape and the method according to the invention ensure that a seal is obtained with excellent recovery of the bonded fabric.

In order to further clarify the properties of this invention and to point out the extra advantages and peculiarities thereof, there now follows a more detailed description of the adhesive tape and of the work method for the introduction of an elastic hem made out of elastic textile material into a item of clothing. It is clear that nothing in the following description here can be interpreted as a limitation of the claims applied for this invention.

In this description drawings are referred to by means of reference figures whereby:

- *figure 1a is a representation of the adhesive tape according to the invention;*
- *figure 1b is a representation of the adhesive tape according to the invention that is brought under tension;*
- *figure 2 is a representation of the elastic support that is laminated with adhesive film on the full breadth;*
- *figure 3 is a representation of the cutting of the adhesive tape to the required breadth;*
- *figure 4 is a representation of an application the adhesive tape by the finishing of a woman's panties;*
- *figure 5 is an overhead view of the surface of the support, whereby the openings are visible.*

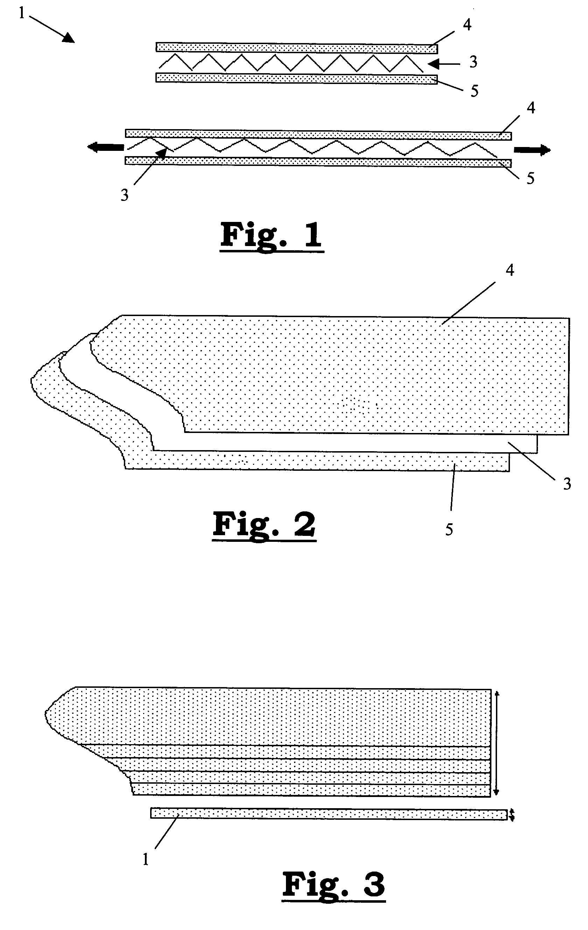

The temperature sensitive adhesive tape (1) for the forming of a hem (folded edge) of a garment of stretch fabric is, as shown in figure 1a, comprises three layers: the two outside layers (4 and 5) comprise a temperature sensitive adhesive layer, preferably a polyurethane adhesive e.g. 50 or 100 mu. The inside layer (3) is manufactured from a thin elastic support material that retains its elastic properties (temperature stable) at high temperatures (160 - 180C°). The support material (3) is preferably manufactured from a combination of polyamide and elastomer threads.

Through the temperature stable properties of the support material (3) the tape (1) can also be set under tension during adhesion (by high temperature 160 - 180C°) (see figure 1b), and the tension in the adhesive hem of the item of clothing can be introduced. Thus, it is possible to apply fringe to the finished edge of this tape (1). The advantage over existing tapes is that this tape has many more possibilities in the application and offers a better quality finish:

- the recovery is better than existing tapes;
- the hem can be finished to size;
- the hem can be finished with a fringe.

The adhesive process goes as follows: the adhesive tape (1) is applied on or between the fabric to be bonded. After, the tape is heated to a specific bonding temperature, whereby the adhesive layer (4,5) becomes activated (the adhesive layer becomes soft and binds with the fabric). In order to ensure the finished dimension, pressure is applied during the adhesive process to obtain a dependable join and elasticity.

It is essential for the invention, that the support material:

- (3) is elastic and temperature stable, so that during bonding the support, it retains its elasticity and that tension can be applied to the tape during bonding, so that the fibres of the fabric are pressed together with the avoidance of superfluous adhesive coming between these fibres.

- is provided with openings (8) that enable a space for the superfluous adhesive not belonging in the adhesive join, rather than in between the fibres of the fabric.

Further, it is desirable that the support material is as thin as possible, in order to achieve a thin finish.

The elastic support material of the adhesive tape (1) according to the invention, as represented in figure 2, is laminated with the adhesive films (4 and 5) along the whole width. As a second step, the adhesive tape can be cut out of the laminate to the required length, preferably a width lying somewhere between 6 and 12 mm., depending on the required fineness of the hem.

A typical embodiment of the tape is based on a support of knitted stretch fabric, with a certain open structure between the fibres e.g. a so-called powernet on the basis of polyamide and polyester in combination with elastomer fibres.

Example

Adhesive tape VdV1 on the basis of elastic support material Liebart 1564 (powernet on the basis of polyamide = elastomer), provided with an adhesive layer on both sides (Bemis 3410/50 micron). The tape is cut to a width of 6 mm.

A test strip was made of 20cm long by 8 cm wide. The fabric used was Liebart 1170, a fabric that is very elastic in all directions. The edge was hemmed and the hem bonded with the tape Vdv1, whereby a certain measure of tension was applied. Test strips with the following tensions were carried out:

- no tension (no fringe);
- light tension (light fringed appearance);
- moderate tension (moderate fringed appearance);

To measure the stretching, marks were made at 10 cm intervals on each side of the middle of the test strip. The test strip was clamped to a Lloyd test apparatus. Then, the test strip was stretched up to a certain maximum value and held stretched out for a period one minute, after which the tension was gradually released so that the test strip could recover. This cycle was repeated three times. After the third time, the final recovery was measured after one hour's rest.

The test was carried out with a maximum stretch of 100 % (in typical situations of elastic materials such as bathing wear and lingerie, stretching from 50 to 80 % is normal).

Lstart: starting distance between the marks (100mm);

L1: maximum distance between the marks (maximum stretch);
L2: distance between the marks after the third cycle and after waiting one hour;

$$\text{Elongation: } (L\,1 / Lstart) * 100\%$$

$$\text{Final recovery: } (L2 - Lstart) / (L1 - Lstart) * 100\%$$

| Test strip: L1170 with tape VdV 1 | No fringe / tensionless adhesive tape | Light fringe / tension on adhesive tape | Moderate fringe / tension on adhesive tape |
|---|---|---|---|
| Lstart (mm) | 100 | 100 | 100 |
| L1 (mm) | 200 | 200 | 200 |
| L2 (mm) | 107 | 104 | 102 |
| Elongation (%) | 100% | 100% | 100% |
| Final recovery (%) | 93% | 96% | 98% |

The test clearly demonstrates that the recovery improves with increased tension on the adhesive tape. With light tension, a recovery is achieved that is better than the required 95%.

The adhesive tape (1) according to the invention has the following advantages:

- the tape (1) can be processed under tension, so that the hem with fringe can be finished and the finished dimension can be controlled;
- the recovery is considerably improved, so that an attractive appearance is still maintained after wearing;
- the support material comprises a material that can be simply produced on full fabric width using existing textile techniques;
- the support material is simple to laminate on full width and thereafter to cut to tapes to the required width.

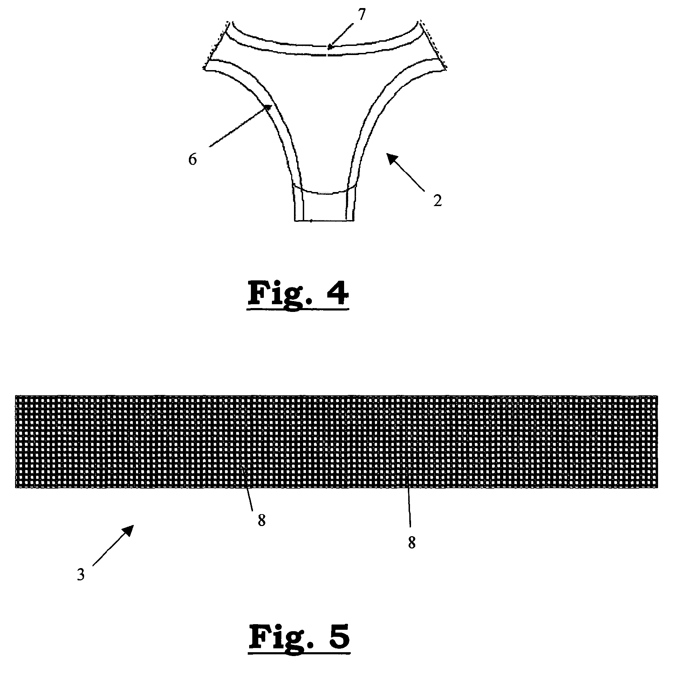

A typical application of the adhesive tape (1) according to the invention is as represented in figure 4, the finishing of a woman's panties (2). The panties (2) are manufactured from strong elastic fabric. The finish of the legs (6) and the waist (7) can be done vie hemming with the adhesive tape (1). Depending on the required appearance, it can be finished with more or less fringe. The finished dimension can be defined exactly by adjusting the tension on the tape. By this means the panties acquire an even and visually attractive appearance with a thin finish that shows minimally under the top clothes.

**Claims**

1.  Temperature sensitive adhesive tape (1) for the forming of a hem of a garment (2) from elastic textile material comprising a temperature stable elastic support (3) which is provided with at least one adhesive layer (4,5) on both sides **characterised in that** the said support (3) comprises openings (8) over at least a part of its surface.

2.  Adhesive tape (1) according to claim 1, **characterised in that** at least 25% of the surface of the support consists of openings (8).

3.  Adhesive tape (1) according to claim 1 or 2, **characterised in that** the maximum diagonal dimension of the opening (8) falls between 0.1 and 0.5 mm.

4.  Adhesive tape (1) according to one of the aforementioned claims, **characterised in that** the total openings (8) per unit length of the support (3) almost agree with the total openings per unit length of the elastic textile material to be bonded.

5.  Adhesive tape (1) according to one of the aforementioned claims, **characterised in that** the said support (3) is manufactured from a material consisting of polyamide threads or polyester threads and elastomer threads.

6.  Adhesive tape (1) according to one of the aforementioned claims, **characterised in that** the said adhesive layer (4,5) comprises polyurethane adhesive.

7.  Adhesive tape (1) according to claim 6, **characterised in that** the thickness of the adhesive layer is between 40 and 60 µm, particularly 50µm.

8.  Adhesive tape (1) according to one of the aforementioned claims, **characterised in that** the thickness of the said support is between 200 and 400 µm.

9.  Method of applying an elastic hem (6,7) in an article of clothing (2) made from elastic textile material **characterised in that** the method comprises the following steps:

    -   the provision of an adhesive tape (1) according to one of the claims 1 op to and including 8;
    -   the forming of a zoom (6,7) of the said article of clothing (2) whereby the said tape (1) in the hem (6,7) is introduced into the said article of clothing;
    -   the whole subject to heat treatment so that a durable elastic hem (6,7) can be formed.

10. Method according to claim 9, **characterised in that** the said process occurs while the tape (1) is kept under tension so that a fringed hem (6,7) is obtained.

11. Use of an adhesive tape (1) according to one of the claims from 1 to 8 inclusive or manufactured according to claim 9 or 10 for the forming of a hem (6,7).

1

4

3

5

4

3

5

3

## Fig. 1

4

3

5

## Fig. 2

4

1

## Fig. 3

7

6

2

# Fig. 4

8

8

3

# Fig. 5

**European Patent Office**

## EUROPEAN SEARCH REPORT

Application Number

EP 05 07 6445

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | EP 0 708 163 A (TOYO CLOTH CO., LTD; TOYO KNITTING CO., LTD) 24 April 1996 (1996-04-24) * claims 1-5,8 * * page 2, line 46 - page 3, line 3 * * page 4, line 1 - line 45 * * figures 1,2 * * examples * ----- | 1-11 | C09J7/04 A41D27/24 |
| X | EP 0 429 708 A (BILLETER KUNSTSTOFFPULVER AG) 5 June 1991 (1991-06-05) * claims 1,2,6 * * figure 2 * * column 1, line 15 - line 23 * ----- | 1-11 | |
| X | US 4 486 902 A (SAKAI ET AL) 11 December 1984 (1984-12-11) * column 1, line 45 - line 55 * * column 2, line 25 - column 3, line 10 * * figure 3 * ----- | 1-11 | |
| A | EP 0 255 375 A (NITTO ELECTRIC INDUSTRIAL CO., LTD; NITTO DENKO CORPORATION) 3 February 1988 (1988-02-03) * claims * ----- | 1-8 | TECHNICAL FIELDS SEARCHED (Int.Cl.7) C09J A41D A41H |

The present search report has been drawn up for all claims

| Place of search | Date of completion of the search | Examiner |
|---|---|---|
| The Hague | 22 September 2005 | Schlicke, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 05 07 6445

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2005

| Patent document cited in search report | | Publication date | Patent family member(s) | | Publication date |
|---|---|---|---|---|---|
| EP 0708163 | A | 24-04-1996 | AU | 2040295 A | 02-05-1996 |
| | | | JP | 8120231 A | 14-05-1996 |
| EP 0429708 | A | 05-06-1991 | NONE | | |
| US 4486902 | A | 11-12-1984 | DE | 3302306 A1 | 18-08-1983 |
| | | | GB | 2117671 A | 19-10-1983 |
| | | | JP | 58136803 A | 15-08-1983 |
| EP 0255375 | A | 03-02-1988 | DE | 3766313 D1 | 03-01-1991 |
| | | | JP | 63024242 U | 17-02-1988 |
| | | | US | 4844973 A | 04-07-1989 |

EPO FORM P0459

For more details about this annex : see Official Journal of the European Patent Office, No. 12/82